# EUROPÄISCHE PATENTSCHRIFT

(11) **EP 2 559 532 B1**
(45) Veröffentlichungstag und Bekanntmachung des Hinweises auf die Patenterteilung: **26.04.2017**
(21) Anmeldenummer: 12005398.8
(22) Anmeldetag: 25.07.2012
(51) Int. Cl.: B28B 19/00, B28B 23/00, E04C 2/54, B29C 39/10

(54) **Verfahren zur Herstellung eines lichtdurchlässigen Mehrschicht-Verbundbauelementes mit integrierter Fassadenplatte, sowie mit diesem Verfahren hergestellte Produkte**
Method for producing a translucent multilayer composite building element with integrated façade panel, and products produced thereby
Procédé de fabrication d'un élément de construction composite multicouche translucide avec plaque de façade intégrée et produits obtenus selon ledit procédé

(30) Priorität: 16.08.2011 DE 102011111318
(43) Veröffentlichungstag der Anmeldung: 20.02.2013
(73) Patentinhaber: Christandl, Dieter, 8160 Weiz (AT); Christandl, Josef, 8181 St. Ruprecht/Raab (AT); Hofer, Robert, 8181 St. Ruprecht an der Raab (AT)
(72) Erfinder: CHRISTANDL, Dieter, 8160 Weiz (AT); CHRISTANDL, Josef, 8181 St. Ruprecht/Raab (AT); HOFER, Robert, 8181 St. Ruprecht/Raab (AT); HAIDER, Alexander, 8200 Gleisdorf (AT); FISCHER, Oliver, 6850 Dornbirn (AT)
(74) Vertreter: Riebling, Peter

(56) Entgegenhaltungen:
- EP-A1- 2 177 332
- EP-A2- 1 970 179
- JP-A- 2006 220 981
- JP-U- H03 129 637

## Beschreibung

Die Erfindung betrifft ein Verfahren zur Herstellung eines lichtdurchlässigen Mehrschicht-Verbundbauelementes mit integrierter Fassadenplatte und ein nach dem Verfahren hergestelltes Mehrschicht-Verbundbauelement mit integrierter Fassadenplatte.

Ein eingangs genanntes Verfahren zur Herstellung eines derartigen lichtdurchlässigen Mehrschicht-Verbund-Bauelementes ist mit dem Gegenstand der EP 1 970 179 A2 bekannt geworden.

Bei der genannten Druckschrift wird das lichtdurchlässige Mehrschicht-Verbundbauelement dadurch hergestellt, dass zunächst die biegesteif ausgebildeten Lichtleitstäbe durch Bohrungen eines Isolierkörpers hindurch gesteckt werden, so dass die mit ihren Enden aus den einander gegenüberliegenden Flächen der Isolierplatte hinausragen.

Der so hergestellte Grundkörper wird dann in eine Schalungsform eingetaucht, in deren Bodenfläche bereits schon eine aushärtbare Vergussmasse angeordnet ist, die als Tragschicht dient und die mechanisch belastbar ausgebildet ist.

Im nächsten Verfahrensschritt wird auf der Oberseite der Isolierplatte noch der Rest der aushärtbaren Vergussmasse aufgegossen, so dass sich damit ein an beiden Seiten mit einer Tragschicht abgeschlossener Mehrschicht-Verbundbaukörper ergibt. Wenn der so mit beidseitigen Tragschichten ausgegossene Mehrschicht-Verbundkörper aus der Schalung herausgenommen wird, ist als nächster Verfahrensschritt notwendig, die einander gegenüberliegenden Stirnseiten des Mehrschicht-Verbundkörpers zu beschleifen, um diese mit der Ebene der ausgehärteten Vorsatzschicht flächenbündig zu gestalten, um die Enden der Lichtleitstäbe frei zu legen.

Das geschilderte Herstellungsverfahren ist relativ aufwendig, weil zunächst in Handarbeit die Lichtleitstäbe durch Bohrungen eines Isolierstoffkörpers hindurch gesteckt werden müssen und als nächstes eine Schalungsform verwendet werden muss, in welcher die beiden einander gegenüberliegenden Vorsatzschichten auf dem Isolierkörper aufgegossen oder aufgespritzt werden.

Das nachfolgende Beschleifen der beiden einander gegenüberliegenden Stirnseiten erhöht den Arbeitsaufwand bei der Herstellung eines solchen Verbundkörpers erheblich.

Nachteil des genannten Verfahrens ist nicht nur das relativ aufwendige Herstellungsverfahren, sondern darüber hinaus, dass es nicht möglich ist, den Mehrschicht-Verbundbaukörper mit einer Fassadenplatte zu verbinden.

Zwar wäre es möglich, eine Fassadenplatte mit Bohrungen direkt vor die Vorsatzschicht mit den stirnseitig dort verankerten Lichtleitstäben zu setzen, was jedoch mit dem Nachteil verbunden ist, dass es relativ schwierig ist, die Bohrungen in der Fassadeplatte fluchtend mit den in der Vorsatzschicht verankerten Stirnseiten der Lichtleitstäbe zur Deckung zu bringen. Außerdem ist die nachträgliche Verbindung einer Fassadenplatte mit der Vorsatzschicht nur schwierig über eine Klebung oder dergleichen auszuführen.

Ferner ist nachteilig, dass wegen der Dicke der Fassadenplatte von z. B. 2 bis 5 mm die Bohrungen in der vorgesetzten Fassadenplatte selbst nicht mit Lichtleitstäben ausgefüllt sind, sondern als Hohlbohrungen lediglich vor die Stirnseiten der Lichtleitstäbe vorgesetzt sind. Damit entsteht ein unerwünschter Lichtverlust, weil das Licht noch durch die Hohlbohrungen in den Fassadenplatten hindurch treten muss und hierbei Streuverluste erleidet. Ferner sind solche Hohlbohrungen in Fassadenplatten nachteilig, denn sie setzen sich mit Schmutz und Unrat voll, was bei einem längeren Gebrauch der Fassaden-Mehrschichtelemente zu einer vollständigen Abdeckung der lichtabgebenden Stirnseiten der Lichtleitelemente bedingt durch in den Bohrungen entstehende Ablagerungen führt.

Die Druckschrift EP 2 177 332 A offenbart ein Verfahren zur Herstellung eines wärmegedämmten, lichtleitenden Mehrschicht-Verbund-Bauelementes für Fassaden an Bauwerken, gemäß dem Oberbegriff des Anspruchs 1. Der Erfindung liegt deshalb die Aufgabe zugrunde, ein Verfahren zur Herstellung eines lichtdurchlässigen Mehrschicht-Verbundbauelementes so weiterzubilden, dass in das Mehrschicht-Verbundbauelement unmittelbar mindestens eine Fassadenplatte integriert werden kann und dass insgesamt das Herstellverfahren einfacher und kostengünstiger durchzuführen ist.

Zur Lösung der gestellten Aufgabe ist die Erfindung durch die technische Lehre des Anspruches 1 gekennzeichnet.

Zum Einen wird die im zweiten Schritt verwendete Schalungsplatte erfindungsgemäß gleich als Fassadenplatte ausgebildet und verbleibt nach dem Ausschalen der Gieß- oder Spritzgussform am Bauelement selbst. Damit wird der Vorteil erreicht, dass die mit Bohrungen für den Eingriff der Stirnseiten der Lichtleitelemente ausgebildete Fassadenplatte die Lichtleitelemente bereits schon aufnimmt und die Bohrungen in der Fassadenplatte damit ausgefüllt sind, wodurch die vorher als nachteilig angesehenen Hohlbohrungen in der Fassadenplatte entfallen. Die Lichtleitelemente können an ihren Stirnseiten so flächenbündig in den Bohrungen oder Ausnehmungen der Schalungsplatte integriert werden, so dass diese flächenbündig mit der Außenseite der Schalungsplatte sind.

Weil die Schalungsplatte als Fassadenplatte ausgebildet ist, ergibt sich der Vorteil einer günstigen, haftschlüssigen Verbindung zwischen der als Schalungsplatte ausgebildeten Fassadenplatte und der daran angespritzten Vorsatzschicht oder Isolierschicht.

Zur Verbesserung des Haftverbundes kann es noch zusätzlich vorgesehen sein, dass an der Rückseite der Schalungsplatte (der späteren Fassadenplatte) noch zusätzliche Verankerungselemente angeformt sind, welche in die daran anzugießende oder zu spritzende Vorsatz- oder Isolierschicht eingreifen und dort verankert sind.

Der einfacheren Beschreibung wegen wird in der folgenden Beschreibung davon ausgegangen, dass das erfindungsgemäße Mehrschicht-Verbund-Bauelement an seinen entgegengesetzt zueinander liegenden Seiten (Sichtseite und Rückseite) jeweils mit als verlorene Schalungselementen ausgebildeten Fassadenplatten bedeckt ist, die jeweils am Mehrschicht-Verbund-Bauelement in der vorher beschriebenen Weise integriert sind.

In einer demgegenüber vereinfachten Ausführungsform kann es jedoch vorgesehen sein, dass die die Rückseite des Mehrschicht-Verbund-Bauelementes bildende Fassadenplatte nicht aus dem gleichen Material besteht wie die die Sichtseite des Verbund-Bauelementes bildende vordere Fassadenplatte. Es kann hierbei vorgesehen sein, dass die die Rückseite ausbildende Platte, z. B. aus einem Holzwerkstoff, einem kostengünstigen Kunststoffwerkstoff, aus Papier oder Pappe besteht, wobei nur wesentlich ist, dass die die Rückseite des Verbundbauelementes ausbildende Schalungsplatte (genauso wie die auf der Vorderseite angeordnete Fassadenplatte) dem Schalungsdruck der in die Schalung einfließenden Vergussmasse standhalten kann.

Es kann sogar vorgesehen sein, dass nach dem Aushärten der Vergussmasse an der Rückseite des Mehrschicht-Verbundkörpers die rückseitige Schalungsplatte entfernt wird, so dass das Mehrschicht-Verbund-Bauelement nur mit einer sichtseitigen Fassadenplatte integriert ist, während an der Rückseite die Schalungsplatte entfernt wurde.

Die Erfindung beansprucht deshalb ein Mehrschicht-Verbund-Bauelement, gemäß dem Anspruch 3.

Unter dem in den Patentansprüchen verwendeten Begriff "Lichtleitelemente" werden sämtliche biegesteifen Lichtleitelemente verstanden, wie z. B. Lichtleitstäbe mit rundem, eckigem, ovalem oder quadratischem Querschnitt, ebenso wie stabförmige, scheibenförmige oder andere Lichtleitelemente, die bevorzugt aus einem lichtleitenden Kunststoff hergestellt sind.

Der einfacheren Beschreibung wegen wird deshalb in der folgenden Beschreibung die spezielle Ausführungsform eines Lichtleitelementes näher beschrieben, nämlich die Ausbildung als Lichtleitstab, obwohl die Erfindung nicht darauf beschränkt ist.

Ebenso sieht die Erfindung verschiedene Möglichkeiten der Anordnung von Lichtleitstäben vor, wobei in einer ersten Ausführungsform vorgesehen sein kann, dass die Lichtleitstäbe im Spritzgussverfahren an einer Gitterstabmatte angespritzt sind, wobei die Gitterstabmatte selbst ebenfalls aus einem lichtleitenden Kunststoff besteht. Somit sind die Längs- und Querstäbe der Lichtleitermatte aus einem lichtleitenden Material ausgebildet, und in den Kreuzungspunkten der Längs- und Querstäbe sind die senkrecht davon abragenden Lichtleitstäbe angespritzt.

Die Lichtleitstäbe überragen somit mit ihren oberen Enden die Gittermatte nach oben und mit ihren unteren Enden die Gittermatte nach unten, so dass sich ein dreidimensionales Gebilde ergibt.

In einer vereinfachten Ausführungsform kann es jedoch auch vorgesehen sein, dass die Lichtleitstäbe als Bündel ausgebildet sind, d. h. sie haben keine Fixierung oder Bindung zueinander, sondern werden erst durch Eingießen in einen Isolierkörper fixiert und erhalten dort ihre gewünschte Raumanordnung.

In einer dritten Ausgestaltung kann es vorgesehen sein, dass die einzelnen Lichtleitstäbe durch andere Fixierungselemente (vorläufig vor Durchführung des Giess- oder Spitzprozesses) zueinander auf Abstand gehalten werden, wie z. B. durch ein Textilgewebe, durch elastomere Massen und dergleichen mehr, wobei die so hergestellte Raumfixierung der Lichtleitstäbe nur für eine vorläufige Fixierung der Lichtleitstäbe dienen soll und nur bis zu dem Zeitpunkt, bis zu dem die mit der Fixierung versehenen Lichtleitstäbe als Bündel in die erste Schalungsform eingelegt werden und dann im Mittenbereich mit einem Isolierstoff ausgespritzt werden.

Damit wird ein etwa mittiger Isolierkörper hergestellt, der bevorzugt aus einem wärmedämmenden Material besteht (z. B. Polyurethanschaum). Sobald die Lichtleitstäbe mit ihrer vorläufigen Fixierung im ausgehärteten Isolierkörper fixiert sind, kommt es auf eine weitere Lagensicherung der Lichtleitstäbe nicht mehr an. Der aus einem aushärtbaren Wärmedämmstoff bestehende Isolierkörper übernimmt dann die Lagenfixierung der Lichtleitstäbe.

Das Material der die Vorsatzschicht oder Tragschicht bildenden Vergussmasse besteht bevorzugt aus einer aushärtbaren Betonschicht, die bevorzugt aus einem selbstverdichtenden Beton (SCC- Self Compacting Concrete) besteht.

Statt eines solchen SCC-Materials kommen auch noch andere aushärtbare Massen in Betracht, wie z. B. gießfähige und aushärtbare Holzverbundwerkstoffe, Kunststoffe, Kunststoff-Mineralgemische, Mineralgussmassen, Tone, Kalke und dergleichen aushärtbare Massen mehr.

Wichtig ist, dass die die Vorsatzschicht bildende Vergussmasse eine relativ hohe mechanische Tragfähigkeit aufweist, so dass ein damit hergestellter Mehrschicht-Verbund-Baustein unmittelbar als Fassadenbaustein (z.B. in der Form als Ziegelstein) in einen Baukörper integriert werden kann und der gegenseitige Verbund zwischen den Bausteinen durch Beton oder einen aushärtbaren Kunststoff oder mechanische Verbindungsanker erfolgt.

Die bevorzugt aus dem gießfähigen und aushärtbaren Beton bestehende Vergussmasse unterscheidet sich von dem aushärtbaren Isolierstoff durch eine höhere Tragfähigkeit, jedoch durch eine geringere Wärmedämmfähigkeit.

Die Erfindung ist jedoch nicht auf einen dreischichtigen Kern des Mehrschicht-Verbund-Bauelementes beschränkt.

In der ersten beschriebenen Ausführungsform besteht dieser Kern aus einer direkt hinter der sichtseitigen Fassadenplatte angeordneten Schicht aus der mechanisch hoch belastbaren Vergussmasse, an die sich ein etwa mittlerer Isolierkörper aus einem hochwärmedämmenden Isolierstoff anschließt, an dessen Rückseite wiederum die zweite hochbelastbare Vergussmasse die weitere Schicht bildet, die nun wieder rückseitig durch eine weitere Fassadenplatte oder durch eine andere Abdeckplatte oder Schalplatte abgedeckt ist, die - entsprechend der vorstehenden Beschreibung - auch nach dem Vergießen der rückseitigen Vergussmasse entfernt werden kann.

Eine Ausführung ist auch vorgesehen, bei der die nächst der Sichtseite direkt hinter der sichtseitigen Fassadenplatte angeordnete hochbelastbare Vergussmasse entfällt und stattdessen die Fassadenplatte direkt mit ihrer Rückseite an der Vorderseite des Isolierkörpers anschließt und dort verankert ist.

Es kann ebenso vorgesehen sein, dass auch deck- und bodenseitig weitere Schichten aus einer hochbelastbaren Vergussmasse oder einer wärmedämmenden Isolierstoffmasse angeordnet sind, deren Anordnung mit einer oder mehreren der vorher genannten Ausführungen korrespondiert.

Als Fassadenplatte werden bevorzugt aus einer Leichtmetalllegierung bestehende Metallplatten verwendet. Es können jedoch auch andere Plattenarten verwendet werden, wie z. B. Kunststoffplatten oder mit Folien belegte Kunststoff- oder Metall- oder Holzplatten.

Wichtig ist, dass die sichtseitig angeordnete Fassadenplatte auch gleichzeitig die Sichtseite des Bauwerkes bildet und damit ein dekoratives Äußeres ausbilden soll. Zur Erzielung dieses Zweckes kann es vorgesehen sein, dass die Aluminiumplatte noch mit Dekorationsfolien belegt ist, einen Druck trägt oder Kunststoff-Metallverbundplatten verwendet werden.

Vorteilhaft bei der Ausführung des Verfahrens ist nämlich, dass es keiner Versäuberung der Sichtseite der sichtseitigen Fassadenplatte bedarf, weil diese als verlorene Schalung sauber mit ihrer Außenseite (der späteren Sichtseite) in die Schalung eingelegt wird und dort keinen Schmutzeinflüssen ausgesetzt ist. Lediglich an die Rückseite dieser sichtseitigen Fassadenplatte wird die Vergussmasse oder wahlweise der Isolierkörper angespritzt oder angeformt oder verankert, was die Vorderseite dieser Fassadenplatte nicht beeinträchtigt.

Es bedarf daher keiner aufwendigen Versäuberung der Sichtseite der Fassadenplatte und auch nicht einer Freilegung der flächenbündig bereits dort in die Bohrungen eingreifenden Lichtleitstäbe oder in die dort angeordneten Ausnehmungen eingreifenden Lichtleitelemente.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: in perspektivischer Darstellung eine Lichtleitermatte
- Figur 2:: schematisiert einen vergrößerten Ausschnitt aus Figur 1 mit um 90° gedrehten Lichtleitstäben
- Figur 3:: ein Bündel aus Lichtleitstäben, deren gegenseitiger Abstand nicht fixiert ist
- Figur 4:: der erste Verfahrensschritt zur Herstellung des inneren Isolierkörpers vor Einspritzen des Isolierstoffes in den Schalungsraum
- Figur 5:: die gleiche Darstellung wie Figur 4 nach dem Einspritzen des Isolierstoffes
- Figur 6:: die Darstellung nach Figur 5 nach Entfernung der endseitig angeordneten Schalungsplatten
- Figur 7:: der sich aus Figur 6 ergebende Körper bei Einbringung in einen zweiten Schalungsraum mit Anordnung von Fassadenplatten als endseitige Schalungsplatten vor dem Einspritzen einer Vergussmasse
- Figur 8:: der sich aus Figur 7 ergebende fertig gestellte Mehrschicht-Verbund-Baukörper
- Figur 9:: der Baukörper nach Figur 8 in perspektivischer Seitenansicht
- Figur 10:: schematisiert das endseitige Eingreifen der Lichtleitstäbe in die Bohrungen der sichtseitigen Fassadenplatte

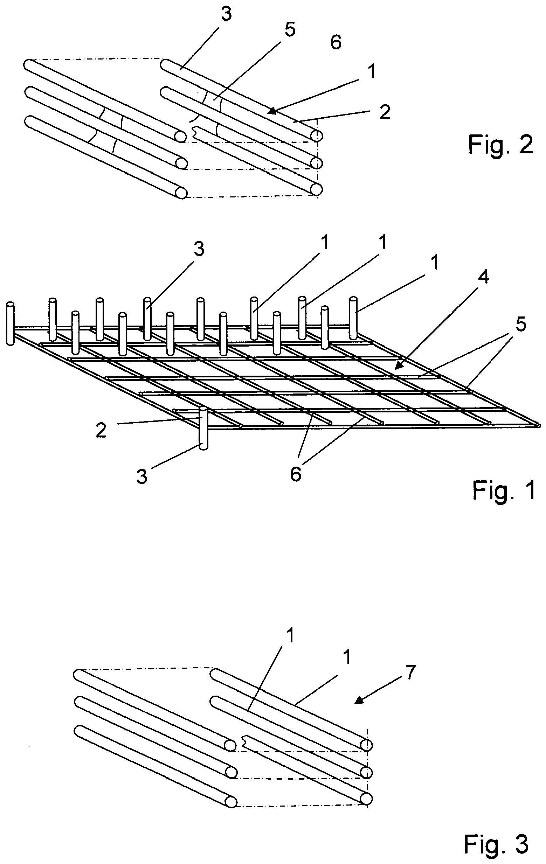

In den Figuren 1 und 2 ist schematisiert dargestellt, dass Lichtleitstäbe 1 in einer beliebigen Konfiguration, Zusammensetzung und mit beliebigem Querschnitt abstandshaltend durch zugeordnete Fixierelemente vorgesehen sein können.

Im gezeigten Ausführungsbeispiel besteht jeder Lichtleitstab aus einem lichtleitenden Kunststoffmaterial, wie z. B. Polykarbon oder dergleichen. Jeder Lichtleitstab 1 weist ein oberes Ende 2 und ein unteres Ende 3 auf und kann eine beliebige Profilierung aufweisen.

Im gezeigten Ausführungsbeispiel nach Figur 1 und 2 ist dargestellt, dass die Lichtleitstäbe 1 auf den Kreuzungspunkten einer Gittermatte 4 angespritzt sind, die aus sich kreuzenden und miteinander verbundenen Längs- und Querstäben 5, 6 besteht.

Die genannten Längs- und Querstäbe 5, 6 sind ebenfalls aus einem lichtleitenden Kunststoffmaterial ausgebildet, so dass sich eine sehr günstige Lichtverteilung auf alle an der Gittermatte 4 angeordneten Lichtleitstäbe 1 ergibt, weil die lichtleitenden Längs- und Querstäbe 5, 6 für eine günstige und gleichmäßige Lichtverteilung über die Fläche der Gittermatte 4 sorgen. Ebenso können die Leitleitstäbe auf der Ober- und Unterseite einer aus Kunststoff bestehenden Folie oder Matte angespritzt sein.

Als anderes Ausführungsbeispiel ist in Figur 3 dargestellt, dass die Lichtleitstäbe 1 beliebiger Konfiguration, Querschnittsform - die somit auch als scheiben- oder als rechteckförmige Elemente ausgebildet sein können - in Form eines Bündels 7 vorhanden sind, wobei dieses Bündel 7 durch nicht näher dargestellte abstandshaltende Mittel die Lichtleitstäbe 1 in ihrer vorgesehenen Konfiguration halten.

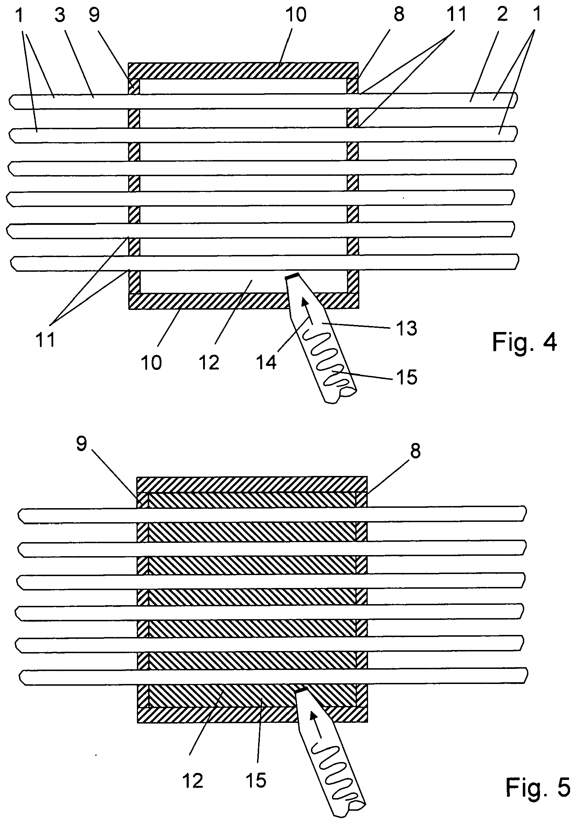

Ein wichtiger Vorteil der Erfindung liegt nun aber gerade darin, dass die Zuordnung der einzelnen Lichtleitstäbe 1 ohne Fixierungsmittel für die Abstandhaltung der Lichtleitstäbe erfolgen kann, wie dies die Figur 4 darstellt.

Um nämlich die Lichtleitstäbe 1, die keinerlei Fixierungsmittel aufweisen, in einer bestimmten gewünschten Konfiguration abstandshaltend zu verbinden, ist eine erste Schalungsform vorgesehen, die aus zwei einander gegenüberliegenden Schalungsplatten 8, 9 besteht, wobei die Schalungsplatten 8, 9 von einer Vielzahl von Bohrungen 11 durchsetzt sind, die zueinander fluchten und durch welche die Lichtleitstäbe 1 gesteckt sind.

Entsprechend der Art und Anordnung der Bohrung 11 werden somit die Lichtleitstäbe 1 von Hand oder maschinell in die Bohrungen 11 der Schalungsplatten 8, 9 eingesteckt, bis sie die in Figur 4 dargestellte Formgebung aufweisen. Dass heißt, dass vordere Ende 2 ragt auf der einen Seite aus dem Schalungsraum 12 heraus, und das hintere Ende 3 auf der anderen Seite.

Der Schalungsraum wird ferner noch durch ober- und unterseitig angeordnete Deckplatten 10 in sich geschlossen.

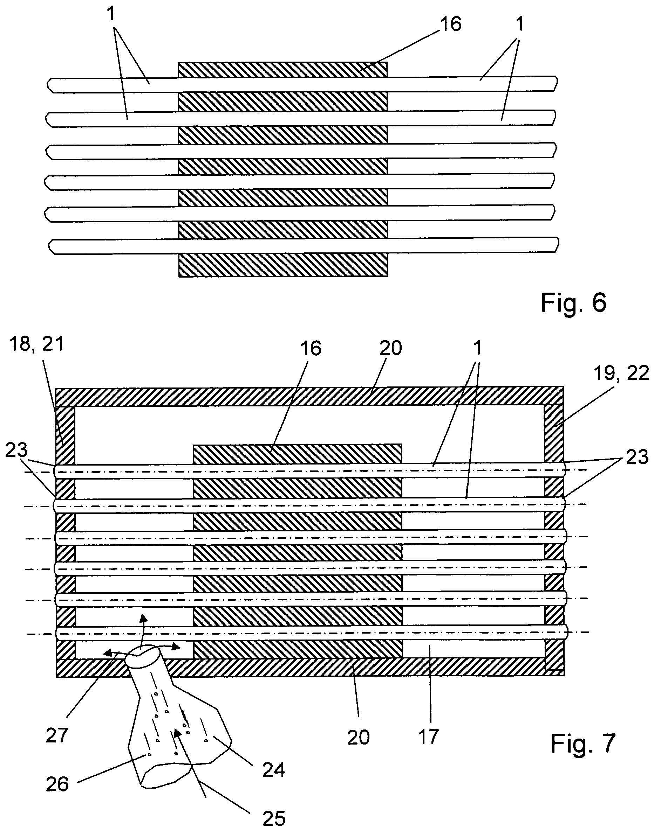

In den Schalungsraum wird gemäß Figur 4 nun mit Hilfe einer geeigneten Füllvorrichtung ein schnell aushärtbarer Isolierstoff 15, z. B. ein PUR-Schaum in Pfeilrichtung 14 eingespritzt. Er härtet dann gemäß Figur 5 aus und umschließt die Lichtleitstäbe 1 von allen Seiten. Diese sind damit in besonders günstiger Weise fixiert, wie dies in Figur 6 dargestellt ist.

Nach Entfernung der Schalungsplatten 9 und der deck- und bodenseitig angeordneten Platten 10 ergibt sich der in Figur 6 dargestellte Isolierkörper 16, in dem nun die Lichtleitstäbe 1 verschiebungssicher und von allen Seiten umhüllt von dem Isolierstoff 15 umgeben sind.

Hierdurch sind alle Lichtleitstäbe 1 fixiert, und es bedarf keiner weiteren abstandshaltenden Fixierelemente oder dergleichen, um den so nach Figur 6 hergestellten Körper in eine weitere Schalung gemäß Figur 7 einzubringen.

Wichtig ist nun, dass zur Herstellung der Schalung nach Figur 7 auf die Endseiten der Lichtleitstäbe 1 zunächst Schalungsplatten 18, 19 aufgesteckt werden, und zwar in der Weise, dass die Endseiten der Lichtleitstäbe 1 in die Bohrungen 23 der Schalungsplatten 18, 19 eingreifen. Damit werden die Schalungsplatte 18, 19 durch die Lichtleitstäbe auf Abstand gehalten und es ergibt sich ein stabiler Schalungsraum, ohne dass die Schalungsplatten durch weitere Fixierelemente in Position gehalten werden müssen.

Erfindungsgemäß ist nun vorgesehen, dass mindestens die sichtseitige Schalungsplatte 18 als Fassadenplatte 21 ausgebildet ist und somit eine verlorene Schalung für den Schalungsraum 17 ausbildet.

Der Schalungsraum 17 wird ferner gebildet durch die boden- und deckseitig angeordneten Deckplatten 20, so dass sich ein insgesamt abgeschlossener Schalungsraum 17 ergibt.

Wenn nun beim Einfüllen einer aushärtenden Vergussmasse 26 in Pfeilrichtung 25 über eine geeignete Füllvorrichtung 24 die relativ schwergewichtige Vergussmasse in den Schalungsraum 17 einfließt, sind die Lichtleitstäbe 1 gegen den hierdurch entstehenden Verformungsdruck in ausgezeichneter Weise fixiert, denn sie sind mit ihren Endseiten jeweils in den Bohrungen 23 der Schalungsplatten 18, 19 aufgenommen und können sich nicht verschieben oder verbiegen.

In einer ersten Ausführungsform der Erfindung ist auch die rückseitige Schalungsplatte 19 des nach Figur 7 hergestellten Mehrschicht-Verbundformkörpers als rückseitige Fassadenplatte 22 ausgebildet.

Hierbei ist es nicht lösungsnotwendig, dass das Material der sichtseitig angeordneten Fassadenplatte 21 mit dem Material der rückseitig angeordneten Fassadenplatte 22 übereinstimmt.

Es wurde im allgemeinen Beschreibungsteil darauf hingewiesen, dass nach dem Ausgießen des Schalungsraumes 17 auch die rückseitige Schalungsplatte 19 vollkommen entfernt werden kann, so dass die hieraus gebildete Fassadenplatte 22 fehlen kann.

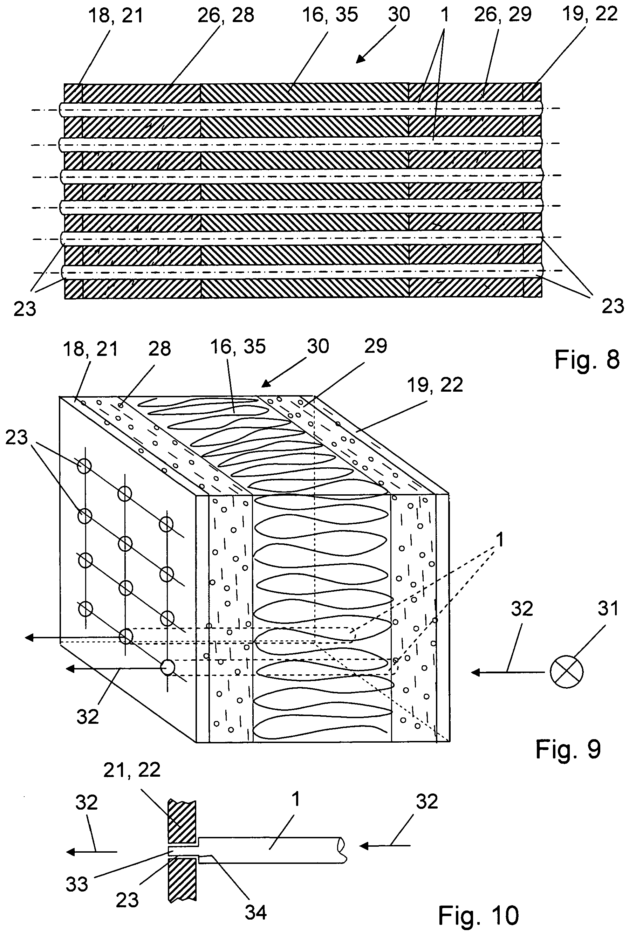

Im gezeigten, einfacheren Ausführungsbeispiel wird jedoch gemäß Figur 8 davon ausgegangen, dass sowohl die sichtseitige als auch die rückseitige Fassadenplatte 21, 22 vorhanden ist, so dass sich der in Figur 8 dargestellte mehrschichtige Verbundkörper ergibt.

Dieser ist in Figur 9 schematisiert in Seitenansicht dargestellt, wo erkennbar ist, dass sich an die Rückseite der sichtseitigen Fassadenplatte 21 - die gleichzeitig die Schalungsplatte 18 ist - eine erste Schicht 28 aus der schnell aushärtbaren Vergussmasse 26 anschließt.

Diese Schicht 28 bildet einen innigen Verbund zur Vorderseite des Isolierkörpers 16, und an der Rückseite dieses Isolierkörpers 16 ist die zweite Schicht 29 aus der aushärtbaren, mechanisch hoch belastbaren Vergussmasse 26 angespritzt und angeformt, und an deren Rückseite schließt wiederum die rückseitige Fassadenplatte 22 als verlorene Schalungsplatte 19 an.

Wie bereits im allgemeinen Beschreibungsteil darauf hingewiesen, muss der hier gezeigte Fassadenbaustein 30 nicht unbedingt aus den Schichten 28, 16, 29 bestehen. Es kann die Schicht 28 entfallen, und die sichtseitige Fassadenplatte 21 kann direkt an die Vorderseite des Isolierkörpers 16 anschließen.

Ebenso kann in einer anderen Ausgestaltung vorgesehen sein, dass die rückseitige Schicht 29 entfällt und die rückseitige Fassadenplatte 22 - sofern sie vorhanden ist - direkt an die Rückseite des Isolierkörpers 16 anschließt.

In Figur 9 ist dann gezeigt, dass eine oder mehrere Lichtquellen 31 die Rückseite der rückseitigen Fassadenplatte 22 bestrahlen, wodurch dann das Licht über die in die Bohrungen 23 eingreifenden Stirnseiten der Lichtleitstäbe 1 aufgenommen, über die Längsachse der Lichtleitstäbe 1 in Pfeilrichtung 32 durch den Fassadenbaustein 30 geleitet wird und an der vorderen Seite (Sichtseite) die in der sichtseitigen Fassadenplatte 21 angeordneten Bohrungen 23 zum Aufleuchten bringt, weil dort die Enden der Lichtleitstäbe 1 möglichst formschlüssig und flächenbündig die Bohrungen 23 ausfüllen.

In Figur 10 ist dargestellt, dass die Stirnseiten jedes Lichtleitstabes noch mit Stufenansätzen 33 versehen werden können, die in die Bohrungen 23 zentriert eingreifen, um so eine leichte Montage der Lichtleitstäbe bei der Herstellung der Schalungsform nach Figur 7 zu ermöglichen.

Der Stufenansatz 33 bildet rückseitige Anschlagkanten 34 am Lichtleitstab aus, mit dem sich der Lichtleitstab an der Rückseite der jeweiligen Fassadenplatte 21, 22 anlegt.

Die wärmedämmende Schicht 35 kann auch mehrteilig oder mehrschichtig ausgebildet sein.

**Zeichnungslegende**

| | | | |
|---|---|---|---|
| 1 | Lichtleiterstab | 19 | Schalungsplatte |
| 2 | oberes Ende | 20 | Deckplatte |
| 3 | unteres Ende | 21 | Fassadenplatte |
| 4 | Gittermatte | 22 | Fassadenplatte |
| 5 | Längsstab | 23 | Bohrung |
| 6 | Querstab | 24 | Füllvorrichtung |
| 7 | Bündel | 25 | Pfeilrichtung |
| 8 | Schalungsplatte | 26 | Vergussmasse |
| 9 | Schalungsplatte | 27 | Pfeilrichtung |
| 10 | Deckplatte | 28 | Schicht (aus 26) |
| 11 | Bohrung | 29 | Schicht (aus 26) |
| 12 | Schalungsraum | 30 | Fassadenbaustein |
| 13 | Füllvorrichtung | 31 | Lichtquelle |
| 14 | Pfeilrichtung | 32 | Pfeilrichtung |
| 15 | Isolierstoff | 33 | Stufenansatz |
| 16 | Isolierkörper | 34 | Anschlagkante |
| 17 | Schalungsraum | 35 | Schicht (aus 16) |
| 18 | Schalungsplatte | | |

## Patentansprüche

1. Verfahren zur Herstellung eines wärmegedämmten, lichtleitenden Mehrschicht-Verbund-Bauelementes für Fassaden an Bauwerken und dgl., bei dem das Mehrschicht-Verbund-Bauelement aus mindestens einer Schicht (28, 29) aus einer aushärtbaren Vergussmasse (26) und mindestens einer wärmegedämmten Schicht (35) aus einem Isolierstoff (15) besteht, und alle Schichten (28, 29, 35) von Lichtleitelementen (1) durchsetzt sind, wobei
a.) in einem ersten Verfahrensschritt die Lichtleitelemente (1) in einem die wärmegedämmte Schicht bildenden Isolierkörper (16) fixiert werden,
b.) in einem zweiten Schritt die im Isolierkörper (16) fixierten Lichtleitelemente (1) in einen aus Schalungsplatten (18, 19) gebildeten Schalungsraum (17) einer Schalungsform (18, 19, 20) eingelegt werden und
c.) in einem dritten Schritt der Schalungsraum unter Bildung mindestens einer Tragschicht mit einer aushärtbaren Vergussmasse (26) gefüllt wird,
**dadurch gekennzeichnet, dass**
zur Ausführung des Schrittes a.) bei der Herstellung des Isolierkörpers (16)
a1.) die Lichtleitelemente (1) in Bohrungen (11) von einander gegenüberliegenden und einen Schalungsraum (12) ausbildenden erste Schalungsplatten (8, 9, 10) hindurch gesteckt werden, dass
a2.) der Schalungsraum (12) mit einem wärmedämmenden, aushärtbaren Isolierstoff (15) gefüllt wird und dass
a3.) nach dem Aushärten des Isolierstoffes (15) die ersten Schalungsplatten (8, 9, 10) entfernt werden und
zur Ausführung des Schrittes b.)
b1.) die im zweiten Schritt verwendeten zweiten Schalungsplatten (18, 19) als verlorene Schalungselemente aus mit Bohrungen (23) oder Ausnehmungen versehenen Fassadenplatten (21, 22) gebildet sind, in welchen die Stirnseiten der Lichtleitelemente (1) mindestens teilweise aufgenommen sind.

2. Verfahren nach Anspruch 1, **dadurch gekennzeichnet, dass** im Schritt c.) die im Isolierkörper (16) eingespritzten und fixierten Lichtleitelemente (1) beim Ausspritzen des Schalungsraumes (17) mit der Vergußmasse (26) gegen den Verformungsdruck der einfliessenden Vergussmasse (26) durch endseitige Fixierung in den als Fassadenplatten (21, 22) ausgebildeten Schalungsplatten (18, 19) gesichert sind.

3. Mehrschicht-Verbund-Bauelement hergestellt gemäß dem Verfahren nach einem der Ansprüche 1 oder 2, **dadurch gekennzeichnet, dass** mindestens zwei einander gegenüberliegende Außenseiten des Mehrschicht-Verbund-Bauelementes durch mit Bohrungen (23) oder Ausnehmungen versehene Fassadenplatten (21, 22) besteht, in welche Bohrungen die jeweiligen Stirnseiten der Lichtleitelemente (1) mindestens teilweise hinein greifen.

4. Mehrschicht-Verbund-Bauelement nach Anspruch 3, **dadurch gekennzeichnet, dass** die Fassadenplatte (21, 22) aus einer LeichtmetallLegierung oder aus Kunststoff oder Holz oder einem Verbund der vorgenannten Materialien besteht.

5. Mehrschicht-Verbund-Bauelement nach Anspruch 3, **dadurch gekennzeichnet, dass** die Lichtleitelemente als biegesteife Lichtleitstäbe (1) oder als Lichtleitscheiben ausgebildet sind.

6. Mehrschicht-Verbund-Bauelement nach einem der Ansprüche 3 bis 5, **dadurch gekennzeichnet, dass** die Lichtleitelemente jeweils stirnseitig einen an den Querschnitt der Bohrung (23) oder Ausnehmung angepassten Stufenansatz (33) aufweisen.

7. Mehrschicht-Verbund-Bauelement nach einem der Ansprüche 3 bis 6, **dadurch gekennzeichnet, dass** die als Fassadenplatten (21, 22) ausgebildeten Schalungsplatten (18, 19) jeweils rückseitige Verankerungselemente tragen, mit denen sie in der daran anschliessenden Schicht (28, 29 oder 35) verankert sind.

## Claims

1. Method for production of a thermally insulated, light-transmitting, multi-layer composite building element for facades on buildings and the like, in which the multi-layer composite building element comprises of at least one layer (28, 29) of a setting pouring compound (26) and at least one thermally insulated layer (35) of an insulating material (15), and all the layers (28, 29, 35) have light-transmitting elements (1) passing through them, wherein
a) in a first method step the light-transmitting elements (1) are fixed in an insulating body (16) forming the thermally insulated layer,
b) in a second step the light-transmitting elements (1) fixed in the insulating body (16) are placed in a formwork cavity (17) of a formwork mould (18, 19, 20) formed of formwork panels (18, 19) and
c) in a third step the formwork cavity is filled with a setting pouring compound (26) forming at least one carrying layer,
**characterised in that**
to carry out the step a) during the production of the insulating body (16)
a1) the light-transmitting elements (1) are passed through bores (11) of first formwork panels (8, 9, 10) which face one another and form a formwork cavity (12), **in that**
a2) the formwork cavity (12) is filled with a thermally insulating, setting insulating material (15) and **in that**
a3) after the setting of the insulating material (15) the first formwork panels (8, 9, 10) are removed and
to carry out the step b)
b1) the second formwork panels (18, 19) used in the second step are formed of lost formwork elements made of facade panels (21, 22) provided with bores (23) or openings in which the ends of the light-transmitting elements (1) are at least partly accommodated.

2. Method according to claim 1, **characterised in that** in the step c) the light-transmitting elements (1) positioned and fixed in the insulating body (16) are secured against the deforming pressure of the inflowing pouring compound (26) during the filling of the formwork cavity (17) with the pouring compound (26) by fixing at the ends in the formwork panels (18, 19) embodied in the form of facade panels (21, 22).

3. Multi-layer composite building element produced by the method according to one of claims 1 or 2, **characterised in that** at least two facing external sides of the multi-layer composite building element comprise facade panels (21, 22) provided with bores (23) or openings in which bores the respective ends of the light-transmitting elements (1) at least partly engage.

4. Multi-layer composite building element according to claim 3, **characterised in that** the facade panels (21, 22) are made of a light metal alloy or of plastic or wood or a composite of the previously named materials.

5. Multi-layer composite building element according to claim 3, **characterised in that** the light-transmitting elements are embodied in the form of flexurally stiff, light-transmitting rods (1) or in the form of light-transmitting disks.

6. Multi-layer composite building element according to one of claims 3 to 5, **characterised in that** at the end the light-transmitting elements each have a stepped projection (33) matching the cross-section of the bore (23) or opening.

7. Multi-layer composite building element according to one of claims 3 to 6, **characterised in that** the formwork panels (18, 19) embodied in the form of facade panels (21, 22) in each case carry rear anchoring elements with which they are anchored in the adjoining layer (28, 29 or 35).

## Revendications

1. Procédé pour fabriquer un élément de construction composite multicouche conducteur de lumière et calorifuge pour façades de bâtiments et autres, selon lequel ledit élément de construction composite multicouche se compose d'au moins une couche (28, 29) de masse de coulage durcissable (26), et d'au moins une couche calorifuge (35) de matière isolante (15), et toutes les couches (28, 29, 35) sont traversées par des éléments conducteurs de lumière 1),
a.) lors d'une première étape de procédé, les éléments conducteurs de lumière (1) étant fixés dans un corps isolant (16) qui forme la couche calorifuge,
b.) lors d'une deuxième étape, les éléments conducteurs de lumière (1) fixés dans le corps isolant (16) étant placés dans un espace de coffrage (17), formé de plaques de coffrage (18, 19), d'un moule de coffrage (18, 19, 20), et
c.) lors d'une troisième étape, l'espace de coffrage étant rempli d'une masse de coulage durcissable (26) en formant au moins une couche de support,
**caractérisé en ce que**
pour réaliser l'étape a.) lors de la fabrication du corps isolant (16),
a1.) les éléments conducteurs de lumière (1) sont passés à travers des perçages (11) de premières plaques de coffrage (8, 9, 10) qui sont opposées et qui forment un espace de coffrage (12), **en ce que**
a2.) l'espace de coffrage (12) est rempli avec une matière isolante calorifuge durcissable (15), et **en ce que** a3.) après le durcissement de la matière isolante (15), les premières plaques de coffrage (8, 9, 10) sont enlevées, et
pour réaliser l'étape b.),
b1.) les deuxièmes plaques de coffrage (18, 19) utilisées lors de la deuxième étape sont conçues comme des éléments de coffrage perdus composés de plaques de façade (21, 22) pourvues de perçages (23) ou de creux dans lesquels les côtés frontaux des éléments conducteurs de lumière (1) sont logés au moins en partie.

2. Procédé selon la revendication 1, **caractérisé en ce que** lors de l'étape c.), les éléments conducteurs de lumière (1) injectés et fixés dans le corps isolant (16) sont immobilisés, lors du remplissage de l'espace de coffrage (17) avec la masse de coulage (26), à l'encontre de la pression de déformation de ladite masse de coulage (26) qui entre, en étant fixés, côté extrémité, dans les plaques de coffrage (18, 19) conçues comme des plaques de façade (21, 22).

3. Élément de construction composite multicouche fabriqué selon le procédé selon l'une des revendications 1 ou 2, **caractérisé en ce qu'**au moins deux côtés extérieurs opposés de l'élément de construction composite multicouche se composent de plaques de façade (21, 22) pourvues de perçages (23) ou de creux dans lesquels les côtés frontaux respectifs des éléments conducteurs de lumière (1) pénètrent au moins en partie.

4. Élément de construction composite multicouche selon la revendication 3, **caractérisé en ce que** la plaque de façade (21, 22) se compose d'un alliage de métal léger ou de matière plastique ou de bois ou d'un composite de ces matériaux.

5. Élément de construction composite multicouche selon la revendication 3, **caractérisé en ce que** les éléments conducteurs de lumière sont conçus comme des barres conductrices de lumière (1) rigides en flexion, ou comme des plaques conductrices de lumière.

6. Élément de construction composite multicouche selon l'une des revendications 3 à 5, **caractérisé en ce que** les éléments conducteurs de lumière présentent chacun, côté frontal, un épaulement (33) adapté à la section transversale du perçage (23) ou du creux.

7. Élément de construction composite multicouche selon l'une des revendications 3 à 6, **caractérisé en ce que** les plaques de coffrage (18, 19) portent chacune des éléments d'ancrage arrière avec lesquels elles sont ancrées dans la couche (28, 29 ou 35) qui leur fait suite.
